Europäisches Patentamt

European Patent Office

Office européen des brevets

(11) Veröffentlichungsnummer: **0 266 641**
**A2**

(12) **EUROPÄISCHE PATENTANMELDUNG**

(21) Anmeldenummer: 87115565.1

(22) Anmeldetag: 23.10.87

(51) Int. Cl.⁴ **C04B 35/58 , C04B 35/00**

(30) Priorität: 04.11.86 DE 3637506

(43) Veröffentlichungstag der Anmeldung:
11.05.88 Patentblatt 88/19

(84) Benannte Vertragsstaaten:
CH DE FR GB LI SE

(71) Anmelder: BAYER AG
Konzernverwaltung RP Patentabteilung
D-5090 Leverkusen 1 Bayerwerk(DE)

(72) Erfinder: Wickel, Ulrike, Dr.
Doerperhofstrasse 39
D-4150 Krefeld(DE)
Erfinder: Franz, Gerhard, Dr.
Erich-Klausenerstrasse 44
D-4150 Krefeld(DE)
Erfinder: Schönfelder, Lothar, Dr.
Am Roedlein 11
D-8630 Coburg-Cortendorf(DE)

(54) Verfahren zur Herstellung von ingenieurkeramischen Pulvern mit Additiven.

(57) Die vorliegende Erfindung betrifft ein Verfahren zur Herstellung von ingenieurkeramischen Pulvern, deren Einzelteilchen mit aus einem anderen Material bestehenden oxidischem Additiv beschichtet sind, wobei das Additiv in Form eines in wäßrigen Medien löslichen und thermisch in Oxid zersetzbaren Salzes oder Salzgemisches auf die Einzelteilchen aufgebracht wird und durch thermische Spaltung in die entsprechende Oxidform überführt wird.

EP 0 266 641 A2

## Verfahren zur Herstellung von ingenieurkeramischen Pulvern mit Additiven

Die Erfindung betrifft ein Verfahren zur Herstellung von ingenieurkeramischen Pulvern, deren Einzelteilchen mit aus einem anderen Material bestehenden oxidischen Additiv beschiechtet sind.

Ferner betrifft die Erfindung $Si_3N_4$-Pulver und die Verwendung dieser Pulver und der ingenierkeramischen Pulver, die nach dem erfindungsgemäßen Verfahren erhältlich sind, zur Herstellung von keramischen Formkörpern.

In der Werkstofftechnologie gewinnen sogenannte ingenieurkeramische Pulver zunehmend an Bedeutung. Ingenieurkeramische Pulver im Sinne der Erfindung sind keramische Pulver aus einer oder mehreren Substanzen der Gruppe BN, $B_4C$, A1N, $A1_2O_3$, SiC, $Si_3N_4$, TiC, $TiB_2$, $ZrO_2$ einschließlich teilstabilisiertem und vollstabilisierten $ZrO_2$ und/oder Mischformen davon.

Die Herstellung von Formkörpern aus ingenieurkeramischen Pulvern erfolgt durch Formgebungs-und Sinterverfahren.

Viele ingenieurkeramische Pulver sind jedoch in reiner Form nur wenig ofer überhaupt nicht sinteraktiv. Durch Zufügen von Additiven kann die Sinterfähigkeit aber in der Regel verbessert und damit bei der Sinterung eine weitgehende Verdichtung des Materials erreicht werden.

Als Additive haben sich dabei vor allem oxidische Materialien, wie beispielsweise MgO, $Y_2O_3$, $Al_2O_3$ und $B_2O_3$ bewährt.

Die ingenieurkeramischen Pulver werden dazu zumeist gemäß DE-A-30 472 55 und US-A 3 992 497 mit den Additiven vermischt und/oder vermahlen. Bei der Sinterung dieses Gemisches wird jedoch in der Regel nur bei sehr hohen Temperaturen und Drucken eine vollständige Verdichtung des Materials erreicht.

In der Dissertation von G. Wötting, TU Berlin 1983, S. 37 u. S. 83-86 wird vorgeschlagen, Salze ( beispielsweise Magnesiumacetat) in Form einer Lösung auf die Oberfläche von $Si_3N_4$-Pulvern aufzubringen. Nach einer Sprühtrocknung und Herstellung eines Grünkörpers durch isostatisches Pressen werden die auf der Oberfläche der $Si_3N_4$-Pulver abgeschiedenen Salze durch Glühen an der Luft in die entsprechenden Oxide überführt.

Dieses Verfahren hat den Nachteil, daß beim Glühen flüchtige Zersetsungsbestandteile der Salze entweichen und zum Zertreiben der Körper oder zu undefinierten Porengrößenverteilungen im Körper führen können. Zudem sind die nach diesem Verfahren erhältlichen Pulver für eine Formgebung durch Schlickerguß nicht brauchbar, da sich die Additive in dem Schlicker wieder auflösen würden.

Eine andere Möglichkeit zur Aufbringung von oxidischen Additiven auf die Oberfläche von keramischen Pulvern besteht in der sogenannten Alkoxid-Sol-Gel-Methode. (Vgl. Horizons of Powder Metallurgy, Part. II, Proceedings of the 1986 Intern. Powd. Met. Conf. and Exhib., Harausg. W.A. Kaysser, W.J. Huppmann, S. 1151-1154, H. Kubo, H. Endo, K. Sugita "Sintering Behavior of ultra-fine Alumina-coated Silicon Carbide".)

Danach werden SiC-Pulver mit einer Lösung von Aluminiumisopropoxid ($i$-$C_3H_7O)_3Al$), gelöst in einem organischen Lösungsmittel, vermischt. Nach einer Trocknung, einer Hydrolyse des Alkoxids zu einem Boehmit (A100H)-Gel bzw. -Sol und/oder Pyrolyse des Alkoxid bzw. des A100H-Gels erhält man SiC-Pulver mit einer A100H-Beschichtung. Diese Beschichtung wird anschließend bei 1200°C in Aluminiumoxid überführt.

Dieses Verfahren hat aber den Nachteil, daß ein Arbeiten in organischen Lösungsmitteln notwendig ist. Zudem kann dieses Verfahren nicht ohne weiteres auf andere Additive übertragen werden, da viele Alkoxide von Elementen, die in oxidische Additive überführbar sind, leicht flüchtige Verbindungen darstellen, was zu Problemen bei ihrer Handhabung führt. Nicht zuletzt hat dieses Verfahren auch den Nachteil, daß Alkoxide zumeist nicht kostengünstig verfügbar sind.

Di Aufgabe der Erfindung bestand nun darin, ein Verfahren zur Herstellung von keramischen Pulvern, deren Einzelteilchen mit aus einem anderen Material bestehenden oxidischen Additiv beschichtet sind, bereitzustellen, das die beschrieben Nachteile nicht aufweist.

Überraschend wurde nun gefunden, daß die Aufgabe gelöst werden kann, indem oxidische Additive in Form von in wäßrigen Medien löslichen und thermisch in Oxide zersetzbaren Salzen oder Salzgemischen auf die Einzelteilchen der keramischen Pulver aufgebracht werden und durch thermische Zersetzung in die entsprechenden Oxide überführt werden.

Gegenstand der Erfindung ist somit ein Verfahren zur Herstellung von ingenieurkeramischen Pulvern, deren Einzelteilchen mit aus einem anderen Material bestehenden oxidischem Additiv beschichtet sind, welches dadurch gekennzeichnet ist, daß das Additiv in Form eines in wäßrigen Medien löslichen und thermisch in Oxid zersetzbaren Salzes oder Salzgemisches auf die Einzelteilchen aufgebracht wird und durch thermische Zersetzung in die entsprechende Oxidform überführt wird.

2

Vorzugsweise werden das Salz oder Salzgemisch in solchen Mengen eingesetzt, daß die keramischen Pulver nach der thermischen Zersetzung mit 0,5 bis 25 Gew.-% oxidischem Additiv beschichtet sind.

Als Salz oder Salzgemisch können verschiedene Substanzen eingesetzt werden. Es werden jedoch solche bevorzugt, die nach der thermischen Zersetzung ein oxidisches Additiv aus der Gruppe Erdalkalioxide, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, Oxide der Seltenen Erden, Gemische oder Mischoxide aus zwei oder mehreren der genannten Oxide bilden.

Besonders bevorzugt ist eine Ausführungsform des erfindungsgemäßen Verfahrens, bei der das Salz oder Salzgemisch in einem wäßrigen Medium gelöst, mit dem keramischen Pulver vermischt wird und das Salz oder Salzgemisch aus der Mischung durch Sprühtrocknung, Gefriertrocknung oder eine Fällungsreaktion als Beschichtung auf die Einzelteilchen des keramischen Pulvers aufgebracht wird.

Es ist aber auch möglich, das Salz oder Salzgemisch aus der Mischung durch eine andere Art der Trocknung, beispielsweise durch Einbringung der Mischung in ein wasserentziehendes Lösungsmittel, auf die Einzelteilcen des ingenieurkeramischen Pulvers aufzubringen. In einer anderen Variante des erfindungsgemäßen Verfahrens werden die ingenieurkeramischen Pulver mit Salzlösung besprüht und anschließend getrocknet.

Insbesondere bei nichtoxidischen ingenieurkeramischen Pulvern ist es vorteilhaft, die thermische Zersetzung unter Inertgas oder im Vakuum durchzuführen, wodurch eine möglicherweise stattfindende Oxidation der Pulver vermieden werden kann. Als Inertgas werden vorzugsweise Stickstoff oder Argon verwendet.

Als in wäßrigen Medien lösliche Salze werden bevorzugt Hydroxide, Carbonate, Nitrate, Salze organischer Säuren aus der Gruppe der Carbonsäuren, Hydroxycarbonsäuren oder Aminocarbonsäuren, oder Gemische davon eingesetzt.

Um Produkte mit einem möglichst hohen Reinheitsgrad zu erhalten, ist es sinnvoll, Salze zu verwenden, die sich rückstandsfrei zum Oxid zersetzen und/oder verbrennen lassen. Besonders vorteilhaft ist es dabei, Salze wie beispielsweise Formiate, Hydroxide und Nitrate einzusetzen, die sich ohne Sauerstoffzufuhr rückstandsfrei zersetzen lassen. Eine thermische Zersetzung zu den .Oxiden kann in diesen Fällen unter Inertgas oder im Vakuum durchgeführt werden, wodurch wie erwähnt eine Oxidation der nichtoxidischen ingenieurkeramischen Pulver vermieden wird.

Aber auch beim Einsatz von Salzen, die nicht ohne Sauerstoffzufuhr rückstandsfrei zersetzbar sind (beispielsweise Acetate), läßt sich eine Oxidation der nichtoxidischen ingenieurkeramischen Pulver verhindern, wenn man die thermische Zersetzung zunächst bei einer Temperatur unter 600°C und der Luft beginnt und anschließend unter Schutzgas oder im Vakuum bei Temperaturen von 600 bis 1200°C fortführt.

Das erfindungsgemäße Verfahren ist universell auf alle ingenieurkeramischen Pulver anwendbar. Man erhält in einfacher und wirtschaftlicher Weise ingenieurkeramische Pulver, deren Einzelteilchen mit oxidischen Additiven beschichtet sind.

Nichtoxidische und insbesondere nitridische ingenieurkeramische Pulver lassen sich nach diesem Verfahren besonders vorteilhaft mit oxidischen Additiven beschichten.

Die beschichteten ingenieurkeramischen Pulver können bei der Sinterung vollständig verdichtet werden, ohne daß die beschriebenen Nachteile auftreten.

Ein weiterer Vorteil des erfindungsgemäßen Verfahrens liegt darin, daß es möglich ist, homogene Mischoxide durch Einsatz entsprechender Salzlösungen auf die Einzelteilchen der Pulver aufzubringen.

Das erfindungsgemäße Verfahren ist insbesondere zur Beschichtung von $Si_3N_4$-Pulver mit oxidischen Additiven geeignet. Die erhältlichen $Si_3N_4$-Pulver zeichnen sich durch besonders günstige Sintereigenschaften und einen Gewichtsverlust von kleiner als 1 Gew.-% beim Glühen bis 1000°C aus. Solche $Si_3N_4$-Pulver sind bisher nicht bekannt.

Gegenstand der vorliegenden Erfindung sind daher auch $Si_3N_4$-Pulver, die dadurch gekennzeichnet sind, daß deren Einzelteilchen mit oxidischem Additiv in Mengen von 0,5 bis 25 Gew.-% beschichtet sind und die $Si_3N_4$-Pulver beim Glühen bis 1000°C einen Gewichtsverlust von kleiner als 1 Gew.-% aufweisen.

Bevorzugt sind solche $Si_3N_4$-Pulver, deren Einzelteilchen mit einem Additiv aus der Gruppe der Erdalkalioxide, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, Oxide der Seltenen Erden, Gemische oder Mischoxide aus zwei oder mehreren der genannten Oxide beschichtet sind.

$Si_3N_4$-Pulver, die einen Oberflächenanreicherungsfaktor K größer als 10 aufweisen, sind besonders bevorzugt.

Der Oberflächenanreicherungsfaktor K, ein Maß für die Oberflächenbedeckung der $Si_3N_4$-Pulvereinzelteilchen mit Additiven, kann durch Tiefenprofiluntersuchungen mit der Sekundärionenmassenspektrometrie (SIMS; F.Schulz, K.Wittmaack, J.Maul. Radiation Effects 18, 211-215 (1973); S.Hofmann, Appl.Phys. 9, 59-66 (1976); S.Hofmann, Surface and Interface Analysis 2, 148-160 (1980); R.G.Gossink, Glass Technology 21, 125-133 (1980) nachgewiesen werden. Der Faktor K ist das Verhältnis der quantitativen Zusammensetzung der Oberfläche bezogen auf die des Volumens (d.h. Beginn des Tiefenprofiles zu Ende des Tiefenprofiles). Bei den SIMS-Messungen haben sich folgende apparativen Parameter bewährt: Primärionen Ar$^+$ (Argonkationen), 12 keV (Kiloelektronenvolt, Strom $10^{-7}$A (Ampere) bei einem Strahldurchmesser von 1,2 mm, Abmischung der im allgemeinen nicht leitfähigen zu messenden Pulver mit reinem Ag(Silber)-Pulver im Verhältnis 1 : 4. Liegen Si$_3$N$_4$-Teilchen und Additivpartikel neben einander vor, zeigen SIMS-Untersuchungen einen zeitunabhängigen, linearen Intensitätsverlauf der für die einzelnen Substanzen charakteristischen Ionen. Sind die Si$_3$N$_4$-Teilchen jedoch mit Additiven beschichtet, treten zu Beginn der Messung im Spektrum überwiegend die Ionen der Additive auf und weniger die Ionen von Si$_3$N$_4$. Erst wenn die bedeckende Schicht durch den Ionenbeschuß abgetragen wird, nimmt die Intensität der aus Si$_3$N$_4$ entstehenden Ionen zu, die der Ionen aus den Additiven ab, bis ein Gleichgewicht erreicht ist, d.h., die Spektren zeigen einen stark zeitabhängigen Verlauf. Mit den obengenannten Apparateparametern ist die Gleichgewichtseinstellung nach spätestens 60 min erreicht, was einem Abbau von 500 bis 1000 Å entspricht. Durch SIMS-Untersuchungen lassen sich auch quantitative Aussagen gewinnen. Über eine Eichung mit Gemischen aus Si$_3$N$_4$-Pulvern und Additiven mit bekannter Additivkonzentration können die mit SIMS gemessenen Ionenintensitäten in Konzentrationen der einzelnen Substanzen umgerechnet werden. Als Maßzahl für die Güte der Oberflächenbedeckung wird mittels der gemessenen Konzentrationen ein Oberflächenanreicherungsfaktor K definiert:

$$ K = \frac{\dfrac{\text{Konzentration Additiv}}{\text{Konzentration Si}_3\text{N}_4}\ \text{an der Probenoberfläche (t=0)}}{\dfrac{\text{Konzentration Additiv}}{\text{Konzentration Si}_3\text{N}_4}\ \text{im Probeninneren (t = 60 min)}} $$

Liegt keine Beschichtung des Si$_3$N$_4$-Pulvers mit Additiven vor, sind die gemessenen Konzentrationen zu Beginn der Messung (t = 0; Probenoberfläche) und nach einem längeren Ionenbeschuß (t = 60 min; Schicht in einer Tiefe von ca. 500 - 1000 Å) gleich. Es ist keine Oberflächenanreicherung vorhanden, und es ergibt sich ein Faktor von K = 1. Liegt hingegen eine ideale, geschlossene Umhüllung der Si$_3$N$_4$-Pulverteilchen mit Additiven vor, ist die Konzentration des Si$_3$N$_4$-Pulvers an der Probenoberfläche (t = 0) gleich Null; daraus ergibt sich ein Oberflächenanreicherungsfaktor von K = ∞ (unendlich). In realen Proben wird der Wert K = ∞ nicht erreicht.

Diese Methode kann auf alle keramischen Pulver mit Additiven angewendet werden. Produkte mit einem Oberflächenanreicherungsfaktor K größer als 10 weisen eine zur Verbesserung der Sintereigenschaften ausreichende Beschichtung mit oxidischem Additiv auf.

Gegenstand der Erfindung ist auch die Verwendung der erfindungsgemäßen Si$_3$N$_4$-Pulver und der nach dem erfindungsgemäßen Verfahren erhältlichen ingenieurkeramischen Pulver zur Herstellung von keramischen Formkörpern.

Durch den sehr geringen Gewichtsverlust beim Glühen bis 1000°C und den hohen Grad der Oberflächenbedeckung mit oxidischen Additiven, können die genannten Pulver besonders vorteilhaft bei der Herstellung von keramischen Formkörpern eingesetzt werden. Sowohl bei der Herstellung des Grünkörpers durch ein Formgebungsverfahren (beispielsweise Pressen, isostatisches Pressen, Schlickerguß oder Spritzguß) als auch beim anschließenden Sinterverfahren (beispielsweise drucklose Sinterung, Gasdrucksinterung, Heißpressen, heißisostatisches Pressen) können die beschriebenen Nachteile vermieden werden.

Das erfindungsgemäße Verfahren soll anhand eines Beispiels näher erläutert werden.

Als charakteristische Größen des mit oxidischen Additiven beschichten Produkts wurden der Oberflächenanreicherungsfaktor K und der Gewichtsverlust beim Glühen bei 1000°C bestimmt. Zum Vergleich wurde der Oberflächenanreicherungsfaktor K eines entsprechenden Pulvers bestimmt, das durch Vermahlen mit oxidischen Additiven hergestellt wurde.

Beispiel

Aus 100 g $Si_3N_4$-Pulver, 95 ml einer ca. 12 gew.-%igen Lösung von Yttriumformiatdihydrat in Wasser und 20 ml einer 18 gew.-%igen Lösung von Aluminiumformiat in Wasser wird in einer Rührapparatur eine Suspension hergestellt. Diese wird in einem Sprühtrockner getrocknet. Das trockene Produkt wird unter Luft 1 h bei 600°C und anschließend unter Stickstoff 1 h bei 1000°C calciniert. Nach der Calcinierung war das $Si_3B_4$-Pulver mit 5,3 Gew.-% $Y_2O_3$ und 1,1 Gew.-% $Al_2O_3$, bezogen auf die gesamte Pulvermenge, beschichtet.

An dem calcinierten Produkt werden Tiefenprofilmessungen mit SIMS (Primärionen $Ar^+$, 12 keV, Strom $1.10^{-7}$ A bei einem Strahldurchmesser von 1,2 mm) durchgeführt.

Aus den gemessenen Ionenintensitäten ergeben sich folgende Konzentrationen c (Angaben in Gew.-%): an der Probenoberfläche (t = 0):
$cAl_2O_3$ = 25,1 %; $cY_2O_3$ = 57,3 %; $cSi_3N_4$ = 17,6 %
im Probeninneren (t = 60 min):
$cAl_2O_3$ = 4,4 %; $cY_2O_3$ = 13,2 %; $cSi_3N_4$ = 82,4 %
und ein Oberflächenanreicherungsfaktor von

$$K = \dfrac{\dfrac{25,1 + 57,3}{17,6}}{\dfrac{4,4 + 13,2}{82,4}} = 21,9$$

Bei Nachglühen bis 1000°C war kein Gewichtsverlust zu verzeichnen.


Vergleichsbeispiel 1

Aus 140 g $Si_3N_4$-Pulver, 16 g $Y_2O_3$-Pulver, 3,6 g $Al_2O_3$-Pulver und 350 ml Isopropanol wird eine Suspension hergestellt. Diese wird 1 h lang in einer Rührwerkskugelmühle mit $Al_2O_3$-Perlen vermahlen. Die Mahlperlen werden anschließend abgetrennt, und die Suspension wird in einem Sprühtrockner getrocknet.

An dem getrockneten Produkt werden Tiefenprofilmessungen mit SIMS durchgeführt. Aus den gemessenen Ionenintensitäten ergeben sich folgende Konzentrationen c (Angaben in Gew.-%):
an der Probenoberfläche (t = 0):
$cAl_2O_3$ = 1,2 %; $cY_2O_3$ = 7,9 %; $cSi_3N_4$ = 90,9 %
im Probeninneren ( t = 60 min):
$cAl_2O_3$ = 1,6 %; $cY_2O_3$ = 4,7 %; $cSi_3N_4$ = 93,7 %
Der Oberflächenanreicherungsfaktor beträgt demnach:

$$K = \dfrac{\dfrac{1,2 + 7,9}{90,9}}{\dfrac{1,6 + 4,7}{93,7}} = 1,5$$


Vergleichsbeispiel 2

Aus 93,6 g $Si_3N_4$-Pulver, 5,3 g $Y_2O_3$-Pulver, 0,3 g $Al_2O_3$-Pulver und 350 ml Isopropanol wird eine Suspension hergestellt. Diese wird 1 h lang in einer Rührwerkskugelmühle mit $Al_2O_3$-Perlen vermahlen. Die Mahlperlen werden anschließend abgetrennt, und die Suspension wird in einem Sprühtrockner getrocknet.

Nach der Sprühtrocknung war die Pulvermischung zusammengesetzt aus 5,5 Gew.-% $Y_2O_3$, 1,9 Gew.-% $Al_2O_3$ und dem Rest $Si_3N_4$.

5

An dem getrockneten Produkt werden Tiefenprofilmessungen mit SIMS durchgeführt. Aus den gemessenen Ionenintensitäten ergeben sich folgende Konzentrationen c (Angaben in Gew.-%):
an der Probenoberfläche (t = 0):
$cAl_2O_3$ = 2,2 %; $cY_2O_3$ = 1,9 %; $cSi_3N_4$ = 95,9 %
im Probeninneren ( t = 60 min):
$cAl_2O_3$ = 3,8 %; $cY_2O_3$ = 1,9 %; $cSi_3N_4$ = 94,3 %
Der Oberflächenanreicherungsfaktor beträgt demnach:

$$K = \frac{\dfrac{2,2 + 1,9}{95,9}}{\dfrac{3,8 + 1,9}{94,3}} = 0,7$$

Die sehr niedrigen Oberflächenanreicherungsfaktoren K zeigen an, daß bei der Vermahlung des $Si_3N_4$-Pulvers mit den oxidischen Additiven nur eine geringe Obrflächenbedeckung der $Si_3N_4$-Pulvereinzelteilchen erreicht wird.

Durch Anwendung des erfindungsgemäßen Verfahrens wird dagegen eine wesentlich verbesserte Oberflächenbedeckung der $Si_3N_4$-Pulvereinzelteilchen mit den oxidischen Additiven erzielt.

### Ansprüche

1. Verfahren zur Herstellung von ingenieurkeramischen Pulvern, deren Einzelteilchen mit aus einem anderen Material bestehenden oxidischem Additiv beschichtet sind, dadurch gekennzeichnet, daß das Additiv in Form eines in wäßrigen Medien löslichen und thermisch in Oxid zersetzbaren Salzes oder Salzgemisches auf die Einzelteilchen aufgebracht wird und durch thermische Zersetzung in die entsprechende Oxidform überführt wird.

2. Verfahren gemäß Anspruch 1, dadurch gekennzeichnet, daß das Salz oder Salzgemisch in solchen Mengen eingesetzt wird, daß die keramischen Pulver nach der thermischen Zersetzung mit 0,5 bis 25 Gew.-% oxidischem Additiv beschichtet sind.

3. Verfahren gemäß Anspruch 1 oder 2, dadurch gekennzeichnet, daß das Additiv ein Erdalkalioxid, $B_2O_3$, $Al_2O_3$, $Sc_2O_3$, $Ga_2O_3$, $Y_2O_3$, $La_2O_3$, $TiO_2$, $ZrO_2$, $HfO_2$, $Cr_2O_3$, ein Oxid der Seltenen Erden, ein Gemisch oder ein Mischoxid aus zwei oder mehreren der genannten Oxide ist.

4. Verfahren gemäß einem oder mehrerer der Ansprüche 1 bis 3, dadurch gekennzeichnet, daß das Salz oder Salzgemisch in einem wäßrigen Medium gelöst, mit dem keramischen Pulver vermischt wird und das Salz oder Salzgemisch aus der Mischung durch Sprühtrocknung, Gefriertrocknung oder eine Fällungsreaktion als Beschichtung auf die Einzelteilchen des keramischen Pulvers aufgebracht wird.

5. Verfahren gemäß einem oder mehrerer der Ansprüche 1 bis 4, dadurch gekennzeichnet daß die thermische Zersetzung unter Inertgas oder im Vakuum durchgeführt wird.

6. Verfahren gemäß einem oder mehrerer der Ansprüche 1 bis 5, dadurch gekennzeichnet, daß das in wäßrigen Medien lösliche Salz ein Hydroxid, ein Carbonat, ein Nitrat, ein Salz einer organischen Säure aus der Gruppe der Carbonsäuren, Hydroxycarbonsäuren oder Aminosäuren oder ein Gemisch davon ist.

7. Verfahren gemäß einem oder mehrerer der Ansprüche 1 bis 6, dadurch gekennzeichnet, daß das ingenieurkeramische Pulver ein nichtoxidisches Pulver ist.

8. Verfahren gemäß einem oder mehrerer der Ansprüche 1 bis 7, dadurch gekennzeichnet, daß das ingenieurkeramische Pulver ein nitridisches Pulver ist.

9. $Si_3N_4$-Pulver, dadurch gekennzeichnet, daß deren Einzelteilchen mit oxidischem Additiv in Mengen von 0,5 bis 25 Gew.-% beschichtet sind und die $Si_3N_4$-Pulver beim Glühen bis 1000°C einen Gewichtsverlust von kleiner als 1 Gew.-% aufweisen.

10. $Si_3N_4$-Pulver gemäß Anspruch 9, dadurch gekennzeichnet, daß das Additiv ein Erdalkalioxid, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, ein Oxid der Seltenen Erden, ein Gemisch oder ein Mischoxid aus zwei oder mehreren der genannten Oxide ist.

11. $Si_3N_4$-Pulver gemäß Anspruch 9 oder 10, dadurch gekennzeichnet, daß die $Si_3N_4$-Pulver einen Oberflächenanreicherungsfaktor größer als 10 aufweisen.

12. Verwendung der Si₃N₄-Pulver gemäß einem oder mehrerer der Ansprüche 9 bis 11 und der keramischen Pulver, erhältlich nach einem Verfahren gemäß einem oder mehrerer der Ansprüche 1 bis 6, zur Herstellung von keramischen Formkörpern.